# EUROPÄISCHE PATENTSCHRIFT

(11) **EP 3 070 344 B1**
(45) Veröffentlichungstag und Bekanntmachung des Hinweises auf die Patenterteilung: **01.08.2018**
(21) Anmeldenummer: 16000278.8
(22) Anmeldetag: 04.02.2016
(51) Int. Cl.: A47B 88/944, F16B 12/14

(54) **ANORDNUNG AUS MÖBELBESCHLAG, BEFESTIGUNGSELEMENT UND EINSATZELEMENT**
ASSEMBLY COMPRISING FURNITURE FITTING, FASTENING ELEMENT AND INSERT ELEMENT
SYSTEME DE FERRURE DE MEUBLE, ELEMENT DE FIXATION ET ELEMENT D'INSERTION

(30) Priorität: 20.03.2015 AT 1602015
(43) Veröffentlichungstag der Anmeldung: 21.09.2016
(73) Patentinhaber: Van Hoecke NV, 9100 Sint-Niklaas (BE)
(72) Erfinder: Van Hoecke, Peter, 9100 Sint-Niklaas (BE); Donceel, Kevin, 9120 Melsele (BE)
(74) Vertreter: Torggler & Hofinger Patentanwälte

(56) Entgegenhaltungen:
- EP-A1- 2 989 928
- EP-A1- 3 001 931
- CH-A- 353 647
- US-A- 5 061 111

## Beschreibung

Die Erfindung betrifft eine Anordnung nach den Merkmalen des Oberbegriffs des Anspruchs 1.

Weiters soll ein Verfahren zur Befestigung eines Möbelbeschlages einer solchen Anordnung angegeben werden.

Derartige Möbelbeschläge zählen bereits zum Stand der Technik und werden beispielsweise in der DE 10 2013 106 092 A1, der CH 353 647 A und der US 5,061,111 A angegeben. Wenn Frontblenden an Seitenzargen von beispielsweise Schubladen oder Schubladeneinsätzen befestigt werden, sollten die dafür notwendigen Verbindungsmittel nach dem Zusammenbau des Möbelstückes nicht mehr sichtbar oder optisch anspruchsvoll sein. Das Verbindungsmittel, wie beispielsweise der Möbelbeschlag, sollte im Verborgenen bleiben - vorzugsweise im Inneren der Seitenzarge oder des Frontbeschlages. Ein weiters Problem ergibt sich aufgrund der Dimensionierung der Seitenzargen und Frontblenden. Diese sollten nicht zu massiv ausgeführt sein, da diese ansonsten unnötig Platz verbrauchen bzw. optisch nicht anspruchsvoll wirken. Ist eine sehr dünnwandige Konstruktion von Seitenzargen und Frontblende erwünscht, ergibt sich das Problem, dass der Möbelbeschlag bzw. die Befestigungsmittel oftmals aufgrund der dünnwandigen Konstruktion nicht mehr genug Halt im Grundmaterial der Frontblende oder Seitenzarge haben und die Stabilität des Möbelstückes beeinträchtigt wird.

Dies wird bei der erfindungsgemäßen Anordnung durch die Merkmale des Hauptanspruchs erreicht.

Wenn das Einsatzelement und der Möbelbeschlag in Montagelage im Wesentlichen quer zueinander angeordnet sind, und sich gegenseitig über das wenigstens eine Befestigungselement und das wenigstens eine Gegenhalteelement halten, kann aufgrund der Querverbindung zwischen Einsatzelement und Möbelbeschlag eine sehr kompakte Bauweise erzielt werden. Vor allem dann, wenn das Einsatzelement in eine dafür vorgesehene Einsenkung - welche sich stirnseitig im ersten Möbelstück, beispielsweise einer Frontblende befindet - eingeschoben wird und sich formschlüssig mit dem ersten Möbelteil verbindet.

Wenn das zumindest eine Befestigungsmittel in der Montagelage im Wesentlichen senkrecht zum in das erste Möbelteil versenkbaren Einschubabschnitt des Einsatzelementes ausgerichtet ist, wird die Montage der Befestigungsmittel stark erleichtert. Ist das Befestigungsmittel beispielsweise als Schraube ausgeführt, ist das Einsetzten des Befestigungsmittels und das Befestigen des Möbelbeschlages in einer günstigen Montageposition durchführbar.

Als besonders vorteilhaft hat es sich dabei herausgestellt, dass der Einschubabschnitt plattenförmig ausgestaltet ist. Durch die plattenförmige Ausgestaltung ist es möglich, eine sehr dünnwandige Frontblende zu realisierten. Durch die somit erzielte kompakte Bauweise ist es möglich, Frontblenden in Wandstärken zwischen 4 mm bis 14 mm, vorzugsweise zwischen 6 mm und 11 mm zu realisieren. Da das Einsatzelement einen Steg ausbildet, der im Wesentlichen quer zum Einschubabschnitt angeordnet ist, kann der Steg eine einer stirnholzseitigen Stirnfläche des ersten Möbelteils angepasste Geometrie aufweisen, wobei der Steg in Montagelage zumindest die Stirnfläche des ersten Möbelteils vollständig überdeckt. Somit ist es möglich, je nach Ausgestaltung des Steges, eine optisch anspruchsvolle Verbindung zwischen erstem und zweitem Möbelteil bzw. zwischen erstem Möbelteil und Möbelbeschlag herzustellen.

Wenn dabei der Einschubabschnitt zwei nicht parallel gegenüberliegende Abschnittsflächen aufweist, wobei eine der Abschnittsflächen im Wesentlichen parallel zu einer zum Steg rechtwinkligen Ebene angeordnet ist und die andere Abschnittsfläche in einem von 2° abgeneigten Winkel zu einer zum Steg rechtwinkligen Ebene, so wir der Einschub des Einsatzelementes aufgrund der zusammenlaufenden Abschnittsflächen erleichtert und es können Toleranzabweichungen bei der Einsenkung in der Stirnfläche des ersten Möbelteils kompensiert werden.

Wenn der Steg im Übergang zum Einschubabschnitt einen Absatz ausbildet, wobei der Absatz in Montagelage mit dem ersten Möbelteil kontaktiert und den Steg um einen Abstand vom ersten Möbelteil beabstandet, wobei der Abstand einen Wert zwischen 0,1 mm und 0,8 mm beträgt, so entsteht zwischen dem Steg und dem Möbelteil ein Spalt - auch Schattenfuge genannt - der das optische Erscheinungsbild des Möbelteils verbessert. So werden beispielsweise Ausfransungen, Ausbrüche oder optisch nicht anspruchsvolle Schnittflächen durch den Steg überdeckt und durch die Schattenfuge nicht sichtbar gemacht. Durch die Schattenfuge können jedoch auch eventuell auftretendeToleranzprobleme ausgeglichen werden. Die Erfindung sieht vor, dass das Gegenhalteelement als zumindest eine Gewindebohrung ausgeführt ist, wobei am ersten Möbelstück zumindest eine Durchgangsöffnung angeordnet ist, die sich in Montagelage mit dem Gegenhaltehalteelement deckt. Somit ist gewährleistet, dass beim Befestigen des Möbelbeschlags durch das zumindest eine Befestigungsmittel an dieser Durchgangsöffnung, welche sich über dem Gegenhalteelement befindet, ein Teil des Möbelstückes zwischen dem Möbelbeschlag und dem Einsatzelement befindet. Somit werden alle vier Komponenten (Einsatzelement, erstes Möbelteil, Befestigungsmittel, Möbelbeschlag) miteinander verbunden und können sich nicht mehr voneinander lösen. Lösbar ist diese Verbindung nur durch das Entfernen des zumindest einen Befestigungsmittels. Wenn die Einsenkung in der Stirnfläche des ersten Möbelteils eine korrespondierende Form zum Einschubabschnitt des Einsatzelementes aufweist, wird die Montage des Einsatzelementes erleichtert und ein fehlerhafter Zusammenbau verhindert.

Das Verfahren zur Befestigung des Möbelbeschlags der oben beschriebenen Anordnung erleichtert den Zusammenbau einer Schublade bzw. eines Schubladeneinsatzes und schafft ein stabiles und optisch anspruchsvolles Produkt. Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: ein Möbelstück,
- Fig. 2: ein erstes Möbelteil mit einem Einsatzelement,
- Fig. 3: eine Explosionsdarstellung, erstes Möbelteil mit Einsatzelement, Möbelbeschlag, Befestigungsmittel,
- Fig. 4a, 4b: erstes Möbelteil mit Möbelbeschlag im zusammengebauten Zustand mit Schnittdarstellung,
- Fig. 5a, 5b, 5c: Einsatzelement detailliert in Seitenansicht, Vorderansicht und Draufsicht.

### Bezugszeichenliste:

- 1: erstes Möbelteil
- 2: zweites Möbelteil
- 3: Verbindungselement
- 4: Einsatzelement
- 5: Einsenkung
- 6: Stirnfläche
- 7: Befestigungsmittel
- 8: Möbelbeschlag
- 9: Steg
- 10: Durchgangsöffnung
- 11: Gegenhaltelement
- 12: Einschubabschnitt
- 12a: erste Abschnittsfläche
- 12b: zweite Abschnittsfläche
- 13: Markierung
- 14: Absatz
- 15: Einschubhilfe
- 20: Möbelstück
- X: Abstand
- U: Überstand

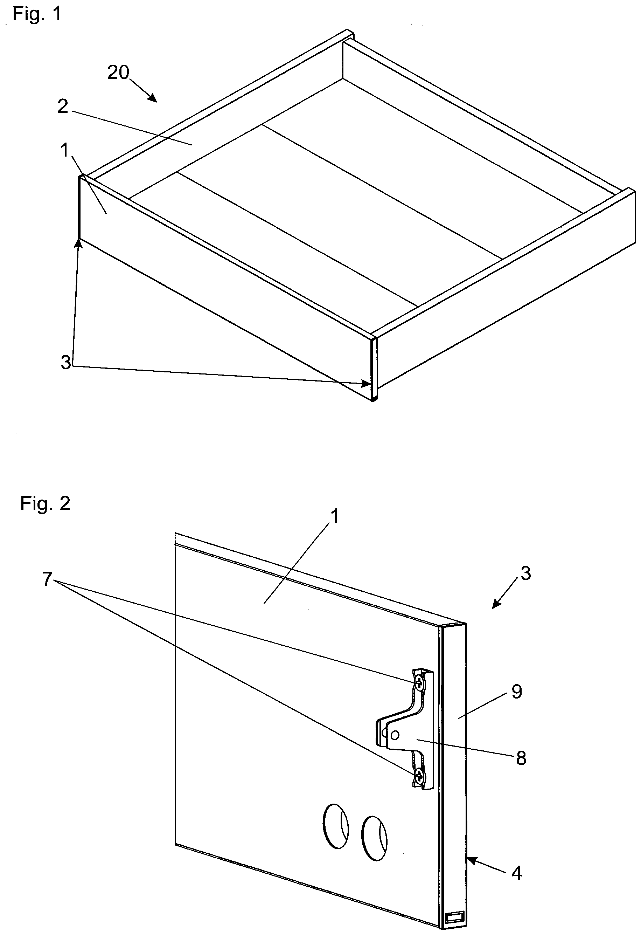

Figur 1 zeigt ein Möbelstück 20 mit einem ersten Möbelteil 1 und einem zweiten Möbelteil 2. Das Möbelstück 20 kann beispielsweise eine Schublade oder ein Schubladeneinsatz oder auch einfach ein Behälter zum Ordnen von Gegenständen wie beispielsweise Accessoires sein. Das erste Möbelteil 1 ist mit dem zweiten Möbelteil 2 über ein Verbindungselement 3 verbunden.

Figur 2 zeigt ein erstes Möbelteil 1 mit einem Verbindungselement 3. Das Verbindungselement 3 wird dabei aus einem Einsatzelement 4, einem Möbelbeschlag 8 und zumindest einem Befestigungsmittel 7 ausgebildet. Das zumindest eine Befestigungsmittel 7 kann beispielsweise als Schraube ausgeführt sein. Andere Befestigungsmittel sind jedoch ebenfalls denkbar. Das zumindest eine Befestigungsmittel 7 befestigt den Möbelbeschlag 8 am ersten Möbelteil 1. Der Möbelbeschlag 8 ist dabei als Clip-Verbinder ausgestaltet, das korrespondierende Gegenstück dazu befindet sich im zweiten Möbelteil und wird in der Figur 2 nicht dargestellt, da dies zum bekannten Stand der Technik zählt. Das Einsatzelement 4 überdeckt mit dem Steg 9 die komplette Stirnseite des ersten Möbelteils 1.

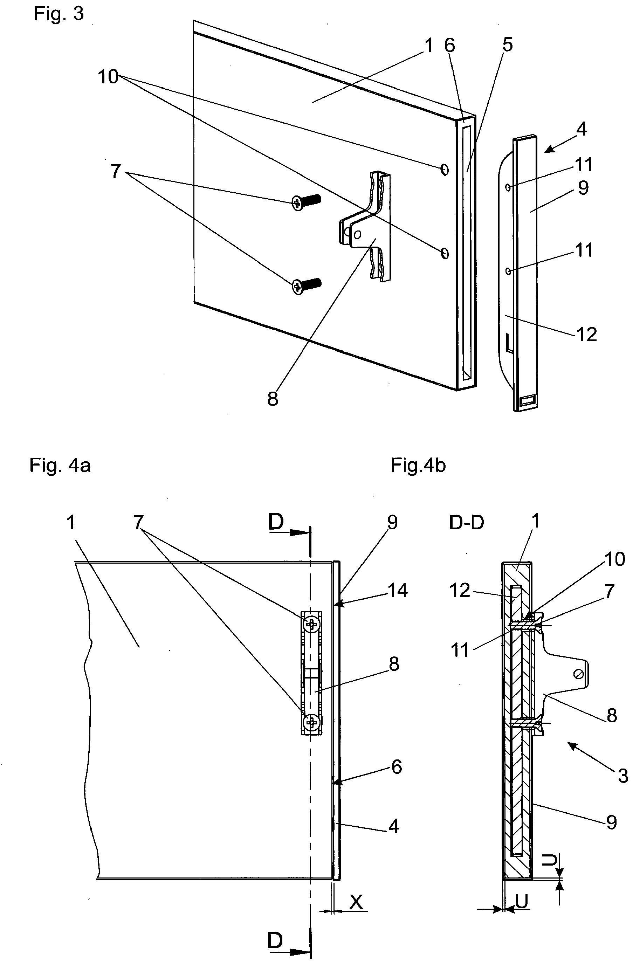

Figur 3 zeigt eine Explosionszeichnung der Anordnung bestehend aus Einsatzelement 4, Möbelbeschlag 8, Befestigungsmittel 7 und erstes Möbelteil 1. Das Einsatzelement 4 ist noch nicht in die Einsenkung 5 der Stirnfläche 6 des ersten Möbelteils 1 eingeführt. Erkennbar ist, dass das Einsatzelement 4 einen Einschubabschnitt 12 aufweist, welcher wiederum das zumindest eine Gegenhalteelement 11 ausbildet. Das zumindest eine Gegenhalteelement ist in diesem Ausführungsbeispiel als Gewindebohrung ausgeführt. Weiters ist erkennbar, dass das erste Möbelteil 1 zumindest eine Durchgangsöffnung 10 aufweist, welche sich im Wesentlichen vollständig mit dem zumindest einen Gegenhalteelement 11 des Einsatzelementes 4 deckt, sobald dieses in das erste Möbelteil 1 eingeschoben wurde. Nach dem Einschieben des Einsatzelementes 4 in die Einsenkung 5 der Stirnfläche 6 des ersten Möbelteils 1 kann über das zumindest eine Befestigungsmittel 7 der Möbelbeschlag 8 durch die zumindest eine Durchgangsöffnung 10 im Gegenhalteelement 11 befestigt werden.

Figur 4a zeigt die Rückansicht eines ersten Möbelteils 1 mit einem daran befestigten Möbelbeschlag 8. Der Möbelbeschlag 8 wird durch zumindest ein Befestigungsmittel 7 in Zusammenwirkung mit dem Einsatzelement 4 im ersten Möbelteil 1 verankert. Der in der Figur 4a angedeutete Schnitt D - D wird in der Figur 4b gezeigt. Zwischen dem Steg 9 und der Seitenfläche 6 befindet sich ein Spalt: Der gezeigte Abstand X ergibt sich durch einen Absatz 14, der durch einen Abschnitt des Steges 9 ausgebildet wird. Diese so entstehende Schattenfuge wird durch den Abstand X zwischen Steg 9 und ersten Möbelteil 1 mit einem Wert zwischen 0,1 mm und 0,8 mm definiert, vorzugsweise bewegt sich dieser Wert um 0,3 mm. Diese Schattenfuge verbessert das optische Erscheinungsbild durch die Kaschierung der Stirnfläche 6 und deren Ecken.

Figur 4b zeigt den Schnitt D - D aus der Figur 4a. Dabei ist erkennbar, dass das zumindest eine Befestigungsmittel 7 durch den Möbelbeschlag 8, die zumindest eine Durchgangsöffnung 10 im ersten Möbelteil 1 und in das zumindest eine Gegenhalteelement 11 des Einschubabschnittes 12 erstreckt. Durch das Beaufschlagen des zumindest einen Befestigungselementes 7 wird so der Möbelbeschlag 8 gegen das erste Möbelteil 1 gepresst, da das Einschubelement 12 mit dem zumindest einen Gegenhalteelement 11 als Widerlager dient. Ein Bestandteil des ersten Möbelteils 1 wird dabei zwischen dem Möbelbeschlag 8 und dem Einschubabschnitt 12 geklemmt. Es entsteht eine feste Verbindung zwischen Möbelbeschlag 8 und dem ersten Möbelteil 1, wobei die in der Figur 4b nicht sichtbare Stirnfläche 6 des ersten Möbelteils durch den Steg 9 - ersichtlich in der Figur 4a oder in der Figur 3 - abgedeckt wird. Durch eine leichte Übergröße des Steges 9 in Relation zur Stirnfläche 6 des ersten Möbelteils 1 wird erreicht, dass aufgrund des Überstandes U Fertigungstoleranzen beim Fertigen des ersten Möbelteils 1 oder auch des Einsatzelementes 4 ausgeglichen werden können. Der Überstand U beträgt zwischen 0,1 mm und 0,8 mm, vorzugsweise 0,3 mm.

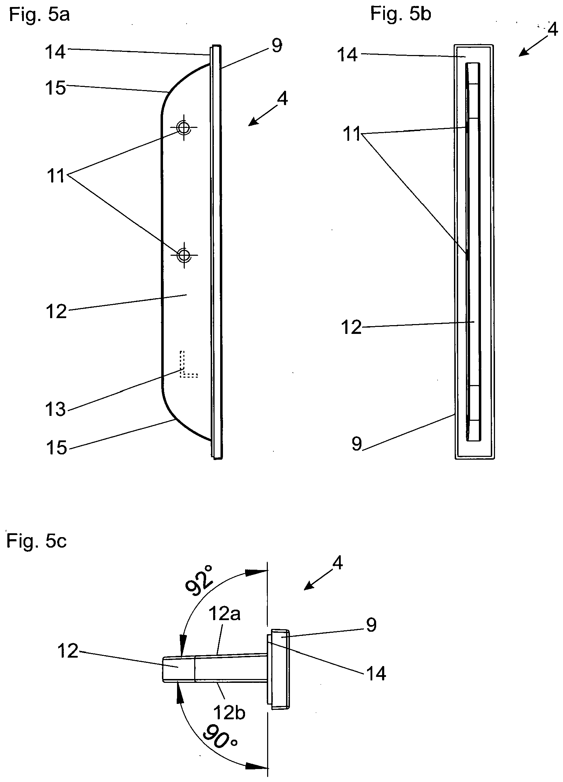

Figur 5a zeigt das Einsatzelement 4 in einer Seitenansicht. Erkennbar ist, dass der Steg 9 an seiner Rückseite einen Absatz 14 ausbildet. Dieser Absatz 14 trägt zur Bildung der Schattenfuge bei, welche in der Figur 4a detailliert erklärt wurde. Nahezu senkrecht auf den Steg 9 erstreckt sich der Einschubabschnitt 12 mit den Einschubhilfen 15. Die Einschubhilfen 15 erleichtern das Einführen in die in der Figur 5a nicht ersichtliche Einsenkung 5 des ersten Möbelteils 1. In diesem Ausführungsbeilspiel sind die Einschubhilfen 15 als Radien ausgeführt. In dem Einschubabschnitt 12 ist das zumindest eine Gegenhalteelement 11 angeordnet - in diesem Ausführungsbeispiel als zwei Gewindebohrungen. Vorzugsweise an dem Einschubabschnitt 12 ist eine Markierung 13 angebracht, welche die Einbauposition des Einsatzelementes 4 anzeigt.

Figur 5b zeigt das Einsatzelement 4 in einem Blickwinkel orthogonal auf die Rückseite des Steges 9, wobei der Absatz 14 zur Bildung der Schattenfuge deutlich als Abgrenzung zwischen Einschubabschnitt 12 und Steg 9 sichtbar ist. Da die zwei Abschnittsflächen 12a, 12b (in Figur 5c ersichtlich) nicht parallel zueinander verlaufen, ist eine der Abschnittsflächen 12a, 12b des Einschubabschnittes 12 auch in dieser Ansicht erkennbar.

Figur 5c zeigt den T-förmigen Querschnitt des Einsatzelementes 4 - die Draufsicht des Einsatzelementes 4. Darin ist erkennbar, dass der Einschubabschnitt 12 durch eine erste Abschnittsfläche 12a und zweite Abschnittsfläche 12b ausgebildet wird. Diese Abschnittsflächen 12a, 12b sind nicht parallel zueinander. In diesem Ausführungsbeispiel wird gezeigt, dass die zweite Abschnittsfläche 12b im Wesentlichen rechtwinklig auf dem Steg 9 angeordnet ist. Die erste Abschnittsfläche 12a ist mit einem Winkel von 2° abweichend von der rechtwinkligen Ebene auf den Steg 9 angeordnet. Daraus ergibt sich, dass sich das Einsatzelement 4 leichter in die in der Figur 5c nicht ersichtliche Einsenkung 5 des ersten Möbelteils 1 einschieben lässt. Die zweite Abschnittsfläche 12b wird beim Beaufschlagen der in der Figur 5c nicht ersichtlichen Befestigungsmittel 7 gegen die Innenseite des ersten Möbelteils 1 gedrückt. Da diese zweite Abschnittsfläche 12b im Wesentlichen rechtwinkelig zum Steg 9 angeordnet ist, liegt der Steg 9 in Montagelage parallel zur in der Figur 5c nicht ersichtlichen Stirnfläche 6 des Möbelstückes. Die erste Abschnittsfläche 12a mit ihrer relativ zur zweite Abschnittsfläche 12b schräg verlaufenden Ebene dient zum leichtern Einführen des Anschubabschnittes 12 in das erste Möbelteil 1.

## Patentansprüche

1. Anordnung aus
- einem Möbelbeschlag (8) zum lösbaren Verbinden eines ersten Möbelteils (1) mit einem zweiten Möbelteil (2), insbesondere einer Frontblende mit einer Seitenwand einer Schublade oder einem Schubladeneinsatz,
- wenigstens einem Befestigungselement (7) zum Befestigen des Möbelbeschlags (8) an dem ersten Möbelteil (1) und
- wenigstens einem Einsatzelement (4), das einen in eine Einsenkung (5) eines ersten Möbelteil (1) versenkbaren Einschubabschnitt (12) aufweist, an dem wenigstens ein Gegenhalteelement (11) zur Halterung des wenigstens einen Befestigungselements (7) ausgebildet ist, wobei das Gegenhalteelement (11) als zumindest eine Gewindebohrung ausgeführt ist, wobei am ersten Möbelstück (1) zumindest eine Durchgangsöffnung (10) angeordnet ist, die sich in Montagelage mit dem Gegenhalteelement (11) deckt, das Einsatzelement (4) und der Möbelbeschlag (8) in der Montagelage im Wesentlichen quer zueinander angeordnet sind und sich gegenseitig über das wenigstens eine Befestigungselement (7) und das wenigstens eine Gegenhalteelement (11) halten,
**dadurch gekennzeichnet, dass** das Einsatzelement (4) einen Steg (9) ausbildet, der im Wesentlichen quer zum Einschubabschnitt (12) angeordnet ist.

2. Anordnung nach Anspruch 1, **dadurch gekennzeichnet, dass** das wenigstens eine Befestigungsmittel (7) in der Montagelage im Wesentlichen senkrecht zum in das erste Möbelteil (1) versenkbaren Einschubabschnitt (12) des Einsatzelements (4) ausgerichtet ist.

3. Anordnung nach Anspruch 1 oder 2, **dadurch gekennzeichnet, dass** der Einschubabschnitt (12) plattenförmig ausgestaltet ist.

4. Anordnung nach einem der Ansprüche 1 bis 3, **dadurch gekennzeichnet, dass** der Einschubabschnitt (12) und der Möbelbeschlag (8) in Montagelage beabstandet sind.

5. Anordnung nach einem der Ansprüche 1 bis 4, **dadurch gekennzeichnet, dass** der Einschubabschnitt (12) zwei nicht parallel gegenüberliegende Abschnittsflächen (12a, 12b) aufweist, wobei eine der Abschnittsflächen (12a) im Wesentlichen parallel zu einer zum Steg (9) rechtwinkligen Ebene angeordnet ist und die andere Abschnittsfläche (12b) in einem von 2° abgeneigten Winkel zu einer zum Steg (9) rechtwinkligen Ebene.

6. Anordnung nach einem der Ansprüche 1 bis 5, **dadurch gekennzeichnet, dass** der Steg (9) eine einer stirnholzseitigen Stirnfläche (6) des ersten Möbelteils (4) angepasste Geometrie aufweist, wobei der Steg (9) in Montagelage zumindest die Stirnfläche (6) des ersten Möbelteils (1) vollständig überdeckt.

7. Anordnung nach einem der Ansprüche 1 bis 6, **dadurch gekennzeichnet, dass** der Steg (9) im Übergang zum Einschubabschnitt (12) einen Absatz (14) ausbildet, wobei der Absatz (14) in Montagelage mit dem ersten Möbelteil (1) kontaktiert und den Steg (9) um einen Abstand (X) vom ersten Möbelteil (1) beabstandet, wobei der Abstand (X) einen Wert zwischen 0,1 und 0,8 mm beträgt.

8. Anordnung nach einem der Ansprüche 1 bis 7, **dadurch gekennzeichnet, dass** in Montagelage ein Bestandteil des ersten Möbelstückes (1) zwischen Einsatzelement (4) und Möbelbeschlag (8) angeordnet ist.

9. Anordnung nach einem der Ansprüche 1 bis 8, **dadurch gekennzeichnet, dass** die Einsenkung (5) des ersten Möbelteils (1) eine korrespondierende Form zum Einschubabschnitt (12) des Einsatzelements (4) aufweist.

10. Möbelteil (1), insbesondere Frontblende einer Schublade oder eines Schubladeneinsatzes, mit einer Anordnung nach einem der Ansprüche 1 bis 9.

11. Möbelteil (1) nach Anspruch 10, **dadurch gekennzeichnet, dass** das erste Möbelstück (1) eine Materialstärke zwischen 4 mm und 14 mm, vorzugsweise zwischen 6 mm und 11 mm aufweist.

12. Möbelteil (1) nach Anspruch 10 oder 11, **dadurch gekennzeichnet, dass** das erste Möbelteil (1) aus Holz, aus einem Holzfaserverbundwerkstoff oder Kunststoff hergestellt ist.

13. Verfahren zur Befestigung des Möbelbeschlags (8) einer Anordnung gemäß einem der Ansprüche 1 bis 12 an einem Möbelteil (1), insbesondere einer Frontblende einer Schublade oder eines Schubladeneinsatzes, **gekennzeichnet durch** die folgenden Verfahrensschritte:
- Einsetzen des Einsatzelementes (4) durch Einführen des versenkbaren Einschubabschnittes (12) in die stirnseitige Einsenkung (5) des ersten Möbelteils (1), wobei sich das wenigstens eine Gegenhalteelement (11) mit der zumindest einen Durchgangsöffnung (10) des ersten Möbelteils (1) deckt, sobald sich das Einsatzelement (4) in Montagestellung befindet.
- Positionieren des Möbelbeschlages (8) quer zum Einsatzelement (4) über dem Bereich der wenigstens einen Durchgangsöffnung (10) des ersten Möbelteiles (1) und dem darunterliegenden wenigstens einen Gegenhalteelement (11).
- Einsetzen des zumindest einen Befestigungsmittel (7) im Wesentlichen quer zum Einsatzelement (4) und Befestigen des Möbelbeschlages (8) durch die Wirkverbindung zwischen dem wenigstens einen Gegenhalteelement (11) und dem zumindest einen Befestigungsmittel (7).

## Claims

1. An arrangement comprising
- a furniture fitting (8) for releasably connecting a first furniture part (1) to a second furniture part (2), in particular a front panel to a side wall of a drawer or a drawer insert,
- at least one fixing element (7) for fixing the furniture fitting (8) to the first furniture part (1), and
- at least one insert element (4) having a push-in portion (12) which can be received in a recess (5) in a first furniture part (1) and on which there is provided at least one counterpart holding element (11) for holding the at least one fixing element (7), wherein the counterpart holding element (11) is in the form of at least one threaded bore, wherein arranged on the first furniture part (1) is at least one through opening (10) which in the assembled position aligns with the counterpart holding element (11), the insert element (4) and the furniture fitting (8) in the assembled position are arranged substantially transversely relative to each other and mutually hold each other by way of the at least one fixing element (7) and the at least one counterpart holding element (11),
**characterised in that** the insert element (1) forms a bar (9) arranged substantially transversely relative to the push-in portion (12).

2. An arrangement according to claim 1 **characterised in that** the at least one fixing means (7) in the assembled position is oriented substantially perpendicularly to the push-in portion (12) which can be received in the first furniture part (1) of the insert element (4).

3. An arrangement according to claim 1 or claim 2 **characterised in that** the push-in portion (12) is of a plate-shaped configuration.

4. An arrangement according to one of claims 1 to 3 **characterised in that** the push-in portion (12) and the furniture fitting (8) are spaced in the assembled position.

5. An arrangement according to one of claims 1 to 4 **characterised in that** the push-in portion (12) has two portion surfaces (12a, 12b) which are disposed in opposite non-parallel relationship, wherein one of the portion surfaces (12a) is arranged substantially parallel to a plane at a right angle to the bar (9) and the other portion surface (12b) is arranged at an angle inclined away by 2° relative to a plane at a right angle to the bar (9).

6. An arrangement according to one of claims 1 to 5 **characterised in that** the bar (9) is of a geometry which is matched to an end-grained end face (6) of the first furniture part (4), wherein the bar (9) in the assembled position completely covers over at least the end face (6) of the first furniture part (1).

7. An arrangement according to one of claims 1 to 6 **characterised in that** the bar (9) forms a step (14) in the transition to the push-in portion (12), wherein the step (14) contacts the first furniture part (1) in the assembled position and spaces the bar (9) from the first furniture part (1) by a spacing (X), wherein the spacing (X) is a value of between 0.1 and 0.8 mm.

8. An arrangement according to one of claims 1 to 7 **characterised in that** in the assembled position a component part of the first furniture part (1) is arranged between the insert element (4) and the furniture fitting (8).

9. An arrangement according to one of claims 1 to 8 **characterised in that** the recess (5) in the first furniture part (1) is of a corresponding shape to the push-in portion (12) of the insert element (4).

10. A furniture part (1), in particular a front panel of a drawer or a drawer insert, having an arrangement according to one of claims 1 to 9.

11. A furniture part (1) according to claim 10 **characterised in that** the first furniture part (1) is of a material thickness of between 4 mm and 14 mm, preferably between 6 mm and 11 mm.

12. A furniture part (1) according to claim 10 or claim 11 **characterised in that** the first furniture part (1) is made from wood, from a wood fibre composite material or plastic.

13. A method of fixing the furniture fitting (8) of an arrangement according to one of claims 1 to 12 to a furniture part (1), in particular a front panel of a drawer or a drawer insert, **characterised by** the following method steps:
- inserting the insert element (4) by introducing the receivable push-in portion (12) into the end recess (5) in the first furniture part (1), wherein the at least one counterpart holding element (11) aligns with the at least one through opening (10) of the first furniture part (1) as soon as the insert element (4) is in the assembled position,
- positioning the furniture fitting (8) transversely relative to the insert element (4) over the region of the at least one through opening (10) in the first furniture part (1) and the subjacent at least one counterpart holding element (11), and
- inserting the at least one fixing means (7) substantially transversely relative to the insert element (4) and fixing the furniture fitting (8) by virtue of the operative connection between the at least one counterpart holding element (11) and the at least one fixing means (7).

## Revendications

1. Dispositif constitué de :
- une ferrure de meuble (8) pour la liaison amovible d'une première partie de meuble (1) avec une deuxième partie de meuble (2), plus particulièrement un panneau avant avec une paroi latérale d'un tiroir ou un insert de tiroir ;
- au moins un élément de fixation (7) pour la fixation de la ferrure de meuble (8) à la première partie de meuble (1) et
- au moins un insert (4), qui comprend une portion d'insertion (12) pouvant être insérée dans une cavité (5) d'une première partie de meuble (1), sur lequel est prévu au moins un contre-élément de maintien (11) pour le maintien de l'au moins un élément de fixation (7), le contre-élément de maintien (11) étant conçu comme au moins un alésage fileté, dans lequel, sur la première partie de meuble (1), se trouve au moins une ouverture de passage (10), qui se superpose, dans la position de montage, avec le contre-élément de maintien (11), l'insert (4) et la ferrure de meuble (8) étant disposés, dans la position de montage, globalement transversalement entre eux et se soutenant mutuellement par l'intermédiaire de l'au moins un élément de fixation (7) et de l'au moins un contre-élément de maintien (11),
**caractérisé en ce que** l'insert (4) forme une entretoise (9), qui est disposée globalement transversalement à la portion d'insertion (12).

2. Dispositif selon la revendication 1, **caractérisé en ce que** l'au moins un moyen de fixation (7) est orienté, dans la position de montage, globalement perpendiculairement à la portion d'insertion (12) de l'insert (4), qui peut être insérée dans la première partie de meuble (1).

3. Dispositif selon la revendication 1 ou 2, **caractérisé en ce que** la portion d'insertion (12) présente la forme d'une plaque.

4. Dispositif selon l'une des revendications 1 à 3, **caractérisé en ce que** la portion d'insertion (12) et la ferrure de meuble (8) sont écartées dans la position de montage.

5. Dispositif selon l'une des revendications 1 à 4, **caractérisé en ce que** la portion d'insertion (12) comprend deux surfaces de portion (12a, 12b) opposées non parallèles, une des surfaces de portion (12a) étant globalement parallèle à un plan perpendiculaire à l'entretoise (9) et l'autre surface de portion (12b) est disposée avec un angle de 2° par rapport à un plan perpendiculaire à l'entretoise (9).

6. Dispositif selon l'une des revendications 1 à 5, **caractérisé en ce que** l'entretoise (9) présente une géométrie adaptée à une face frontale (6), côté tranche du bois frontal, de la première partie de meuble (1), l'entretoise (9) recouvrant entièrement au moins la face frontale (6) de la première partie de meuble (1).

7. Dispositif selon l'une des revendications 1 à 6, **caractérisé en ce que** l'entretoise (9) forme, dans la transition avec la portion d'insertion (12), un épaulement (14), l'épaulement (14) étant en contact, dans la position de montage, avec la première partie de meuble (1) et l'entretoise (9) étant écartée d'une distance (X) de la première partie de meuble (1), la distance (X) ayant une valeur entre 0,1 et 0,8 mm.

8. Dispositif selon l'une des revendications 1 à 7, **caractérisé en ce que**, dans la position de montage, un composant de la première partie de meuble (1) est disposé entre l'insert (4) et la ferrure de meuble (8).

9. Dispositif selon l'une des revendications 1 à 8, **caractérisé en ce que** la cavité (5) de la première partie de meuble (1) présente une forme correspondant à la portion d'insertion (12) de l'insert (4).

10. Partie de meuble (1), plus particulièrement panneau frontal d'un tiroir ou d'un insert de tiroir, avec un dispositif selon l'une des revendications 1 à 9.

11. Partie de meuble (1) selon la revendication 10, **caractérisée en ce que** la première partie de meuble (1) présente une épaisseur de matériau entre 4 mm et 14 mm, de préférence entre 6 mm et 11 mm.

12. Partie de meuble (1) selon la revendication 10 ou 11, **caractérisée en ce que** la première partie de meuble (1) est constituée de bois, d'un matériau composite à base de bois ou d'une matière plastique.

13. Procédé de fixation de la ferrure de meuble (8) d'un dispositif selon l'une des revendications 1 à 12 sur une partie de meuble (1), plus particulièrement sur un panneau frontal d'un tiroir ou d'un insert de tiroir, **caractérisé par** les étapes suivantes :
- insertion de l'insert (4) par introduction de la portion d'insertion (12) insérable dans la cavité frontale (5) de la première partie de meuble (1), l'au moins un contre-élément de maintien (11) se superposant avec l'au moins une ouverture de passage (10) de la première partie de meuble (1), dès que l'insert (4) se trouve dans la position de montage,
- positionnement de la ferrure de meuble (8) transversalement à l'insert (4) au-dessus de la zone de l'au moins une ouverture de passage (10) de la première partie de meuble (1) et de l'au moins un contre-élément de maintien (11) se trouvant en dessous,
- insertion de l'au moins un moyen de fixation (7) globalement transversalement à l'insert (4) et fixation de la ferrure de meuble (8) à l'aide de la liaison fonctionnelle entre l'au moins un contre-élément de maintien (11) et l'au moins un moyen de fixation (7).
